# EUROPEAN PATENT SPECIFICATION

(11) **EP 2 463 132 B1**
(45) Date of publication and mention of the grant of the patent: **11.02.2015**
(21) Application number: 11193153.1
(22) Date of filing: 13.12.2011
(51) Int. Cl.: B60J 5/10

(54) **Vehicular back door having antitheft structure**
Fahrzeughintertür mit Diebstahlsicherungsstruktur
Portière arrière de véhicule dotée d'une structure antivol

(30) Priority: 13.12.2010 JP 2010277192
(43) Date of publication of application: 13.06.2012
(73) Proprietor: Honda Motor Co., Ltd., Tokyo 107-8556 (JP)
(72) Inventor: Saitoh, Hajime, Saitama (JP); Masuta, Noriaki, Saitama (JP); Abe, Kazuhiro, Tochigi (JP)
(74) Representative: Beder, Jens

(56) References cited:
- FR-A3- 2 931 505
- US-A1- 2003 071 481
- US-A1- 2003 173 796

## Description

The present invention relates to a vehicular back door having an antitheft structure for preventing illicit unlocking of the back door.

Vehicular back doors provided as a closure means for opening and closing a door opening formed in a rear side of a motor vehicle include a latch mechanism lockingly engageable with a striker on a vehicle body to keep the back door in a closed position. In recent years, various antitheft techniques have been proposed for the purpose of preventing illicit unlocking of the latch mechanism of the back door. A typical example of such antitheft techniques is disclosed in Japanese Patent Application Laid-open Publication (JP-A) No. 2008-307927.

The disclosed antitheft technique is embodied in a vehicular back door provided with a latch mechanism, which is lockingly engageable with a striker provided on a vehicle body. The latch mechanism is disposed in an internal space defined between an inner panel (inner frame) and an outer panel of the back door. The inner panel has an interior surface covered by a lining. The lining has a large bulged portion formed to protrude into the internal space and oriented toward the outer panel. The bulged portion is located directly above the latch mechanism. With this arrangement, when the back door is kept in a closed position by interlocking engagement between the latch mechanism and the striker, if an illicit tool, such as a piece of wire or a thin rod, is inserted from a small hole in the outer panel into the internal space of the back door with an intension to illicitly unlock the latch mechanism, an advancing movement of the illicit tool will be blocked by the bulged portion before a tip end of the illicit tool reaches the latch mechanism. The bulged portion disposed above the latch mechanism cannot prevent illicit unlocking of the back door when the illicit tool approaches the latch mechanism from a width direction of the vehicle.

Another antitheft technique disclosed is Japanese Patent Application Laid-open Publication (JP-A) No. 2003-166371 includes a brace located on a lateral side of a latch mechanism and interconnecting a back door inner panel and the bottom of a latch retainer. However, since a rear end edge of the brace is spaced from a door outer panel, the brace cannot perfectly block an access to the latch mechanism when an illicit tool approaches the latch mechanism from a vehicle width direction. An arrangement attempted to fully close a door internal space from the vehicle width direction will render the back door complicated in construction and increase the weight and cost of the back door.

Another antitheft technique that shows the preamble of claim 1, is show in US 2003/0173796 A1.

It is therefore an object of the present invention to provide a vehicular back door having an antitheft structure, which is capable preventing illicit unlocking of a latch mechanism that may otherwise occur when an illicit tool approaches the latch mechanism from a vehicle width direction through a small hole formed in an outer panel of the back door.

According to the present invention, there is provided a vehicular back for opening and closing a door opening formed in a rear side of a vehicle body, the back door comprising: an outer panel and an inner panel provided on a vehicle interior side of the outer panel and integrally assembled with the outer panel to form the back door with an internal space defined between the outer and inner panels, the inner panel including a door facing section faced with and extending along the outer panel and a sidewall section extending from the door facing section toward the outer panel; a latch mechanism attached to the sidewall section of the inner panel for interlocking engagement with a striker on the vehicle body to keep the back door in a closed position; and an antitheft structure for preventing illicit unlocking of the latch mechanism, the antitheft structure including: a shield wall disposed to cover at least one side of the latch mechanism in a width direction of the vehicle and connected with the outer panel and the sidewall section of the inner panel; and a bead formed on the door facing section of the inner panel and projecting into the internal space of the back door toward the outer panel, the bead being located adjacent to the shield wall.

With this arrangement, because the latch mechanism disposed in the internal space of the back door is covered on its at least one lateral side with the shield wall, an attempt to unlock the back door through an access to the latch mechanism from a lateral outward direction thereof by using an illicit tool inserted from a small hole of the door outer panel into the internal space of the back door is reliably prohibited by the shield wall.

Furthermore, since the shield wall is connected with the outer panel and the sidewall section of the inner panel, there is no space created between the shield wall and the sidewall section of the inner panel and between the shield wall and the outer panel. With this arrangement, the illicit tool inserted from the small hole of the outer panel into the internal space of the back door is no longer possible to approach the latch mechanism via a space or gap formed between the shield wall and the outer panel or alternatively between the shield wall and the sidewall section of the inner panel.

Additionally, because the bead projecting from the door facing section of the inner panel into the internal space of the back door is located adjacent to the shield wall, an access of the illicit tool as approaching the latch mechanism from a lateral outward direction thereof can reliably blocked by the bead even when a space or gap is formed between shield wall and the door facing section of the inner panel.

The bead and the shield wall that are located on at least one lateral side of the latch mechanism cooperate fully to prevent the illicit tool from approaching the latch mechanism from a lateral outward direction of the latch mechanism. By thus blocking illicit access to the latch mechanism by the illicit tool, the antitheft property of the antitheft structure is further improved. The bead and the shield wall are simple in construction and can be readily provided with a limited increase in the weight and cost of the back door.

Furthermore, because the shield wall is directly connected with the outer panel and the sidewall section of the inner panel, the shield wall serves also as a reinforcement member associated with the outer panel. By thus providing the shield wall, the outer panel is made highly rigid and resistant to deformation. Additionally, the bead provided on the door facing section of the inner panel also serves to increase the rigidity of the door facing section. The bead and the shield wall are able to prevent the illicit tool from approaching the latch mechanism from a lateral outward direction thereof and also can increase the rigidity of the door facing section of the inner panel and the rigidity of the outer panel.

Preferably, the bead is offset from the shield wall in the vehicle width direction. With this arrangement, because the bead and the shield are completely free from mutual interference even when they are elongated in the front-rear direction of the vehicle, the antitheft structure possesses an increased degree of design freedom, which may lead to an improvement in the antitheft property.

Preferably, the bead overlaps the shield wall in a front-rear direction of the vehicle. On one hand, the bead is offset from the shield wall in the vehicle width direction, and on the other hand, the bead overlaps the shield wall in the front-rear direction of the vehicle. With the bead thus arranged with respect to the shield wall, there is formed in the internal space of the back door a labyrinth extending in the vehicle width direction. The labyrinth is highly effective to prevent illicit access to the latch mechanism that may be attempted by the illicit tool from a lateral outward direction of the latch mechanism. By virtue of the labyrinth, the antitheft property of the antitheft structure is greatly improved.

Preferably, the bead is located between the latch mechanism and the shield wall. Since the bead is located on a lateral inward side of the shield wall, the labyrinth formed in the internal space of the back door is rendered complicated in configuration as compared to a labyrinth where the bead is located on a lateral outward side of the shield wall. In case where the illicit tool inserted from the small hole of the outer panel into the internal space of the back door has succeeded in passing through a first gap between the front end of the shield wall and the door facing section of the inner panel, a further advancing movement of the illicit tool is prohibited by the bead located adjacent to the shield wall. Under such condition, the illicit tool cannot approach the latch mechanism unless it goes around a top of the bead. By thus prohibiting the illicit tool from making a direct approach to the latch mechanism, the antitheft structure can perform antitheft operation with sufficient efficiency.

Preferably, the door facing section of the inner panel includes a front part extending to cover a front side of the latch mechanism and an upper part extending obliquely and upwardly from an upper end of the front part toward the outer panel and covering at least part of an upper side of the latch mechanism, and the bead extends continuously between the front part and the upper part. With this arrangement, a movement of the illicit tool tending to approach the latch mechanism from above is prohibited by the upper part of the door facing section of the inner panel. By thus prohibiting the illicit tool from making a direct approach to the latch mechanism from above, it is possible to further improve the antitheft property of the antitheft structure. Furthermore, because of the bead provided to extend continuously between the front part and the upper part of the door facing section, the bending rigidity of the inner panel is greatly increased.

Preferably, the latch mechanism is provided with a connector adapted to be connected with an end of a harness, the connector being oriented to face in a lateral outward direction of the latch mechanism. With this arrangement, because the harness is arranged to protrude from the connector in a lateral outward direction of the latch mechanism, the harness further enhances structural complexity of the labyrinth, which will add to the antitheft property of the antitheft structure.
Fig. 1 is a perspective view of a rear part of a vehicle body including a back door having an antitheft structure according to the present invention;
Fig. 2 is a cross-sectional view taken along the line 2-2 of Fig. 1;
Fig. 3 is a perspective view of the antitheft structure of the back door shown with a door outer panel removed for clarity;
Fig. 4 is a view showing a lower part of the back door as viewed in a direction of arrow 4 shown in Fig. 3;
Fig. 5 is a view showing a latch mechanism as viewed from the front side of a vehicle; and
Fig. 6 is a cross-sectional view taken along the line 6-6 of Fig. 1.

A preferred structural embodiment of the present invention will be described below in detail with reference to the accompanying sheets of drawings. In the drawings, reference characters Fr, Rr, Le and Ri are used to refer to a forward direction, rearward direction, leftward direction, and rightward direction, respectively, as viewed from the driver on a motor vehicle.

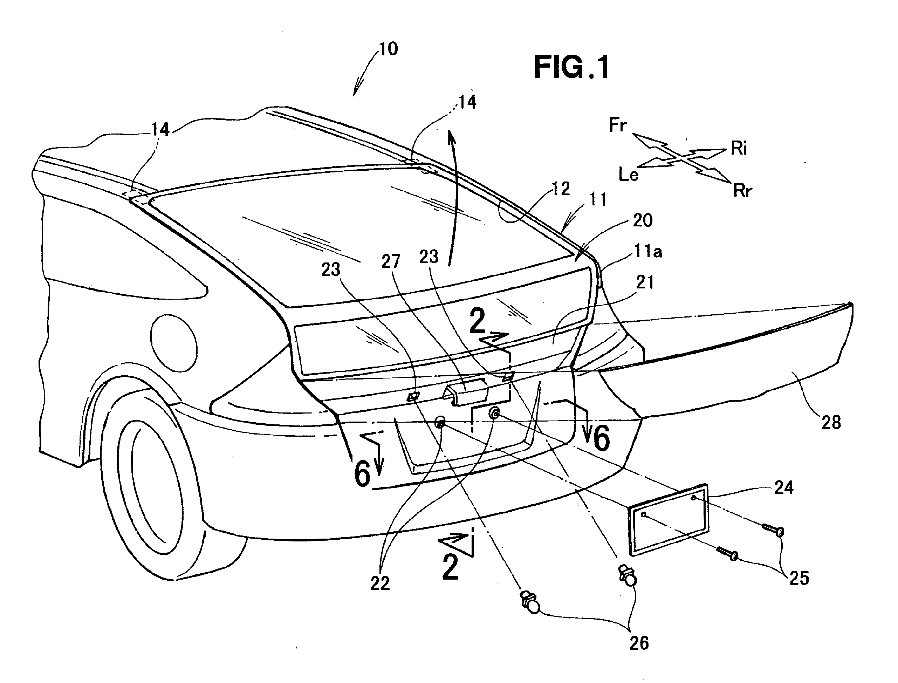

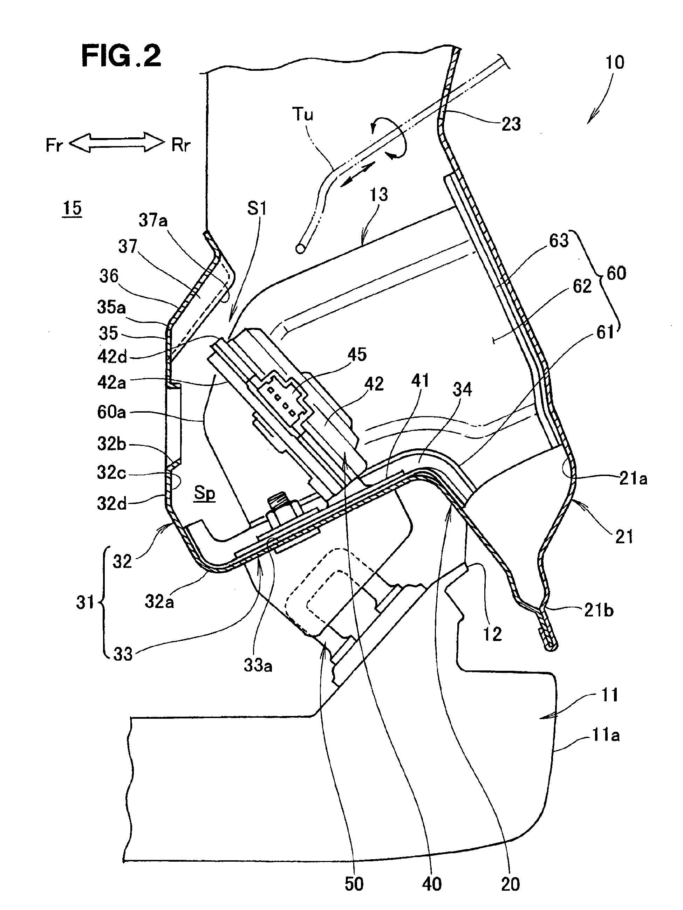

As shown in Fig. 1, the vehicle 10 is a so-called hatchback having a top-hinged back door or hatch 20 for opening and closing a door opening 12 formed in a rear side 11a of a vehicle body 11. The back door 20 is pivotally mounted to the vehicle body 11 for undergoing pivotal or swinging movement about left and right hinges 14, 14 provided adjacent to left and right upper corners of the door opening 12. The back door 20 is provided with a latch mechanism 40 (Fig. 2), which is lockingly engageable with a striker 50 (Fig. 2) on the vehicle body 11 for keeping the back door 20 in a closed position.

As shown in Fig. 2, the back door 20 includes an outer panel 21 forming an exterior surface of the back door 20, and an inner panel or frame 31 provided on a back side (vehicle interior side) of the outer panel 21. The outer panel 21 and the inner panel 31 are integrally assembled with each other with an internal space Sp defined therebetween.

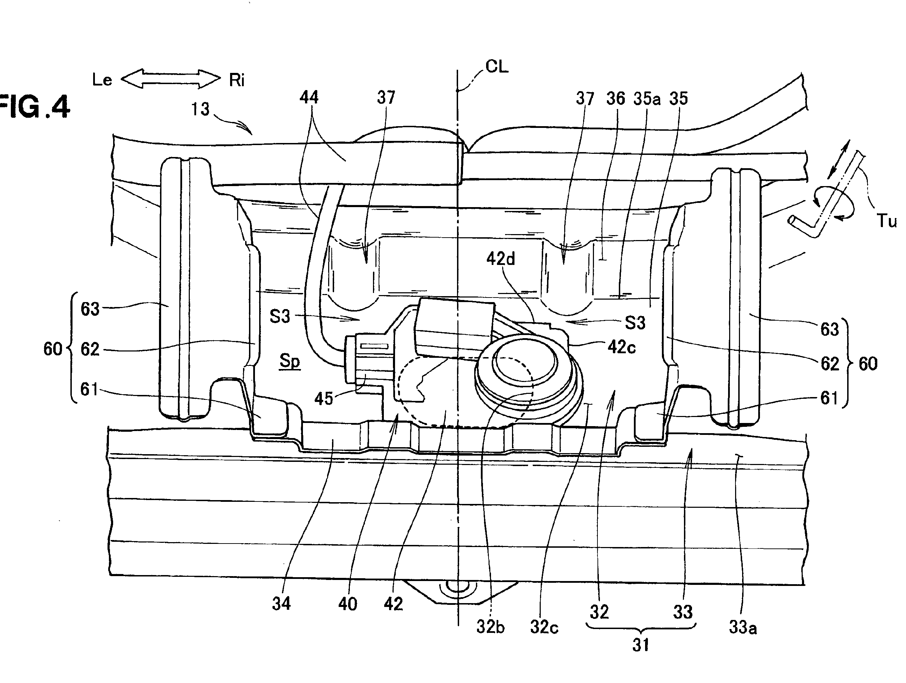

Referring back to Fig. 1, the back door 20 has left and right plate attachment holes 22, 22 and left and right lamp attachment holes 23, 23 that are formed in a lower part of the outer panel 21. The lower part of the outer panel 21 forms an exterior part of a distal end portion of the top-hinged back door 20. The left and right plate attachment holes 22, 22 as well as the left and right lamp attachment holes 23, 23 are arranged symmetrically with respect to a vertical plane extending in register with a longitudinal centerline CL (Fig. 4) of the vehicle body 10. The left and right plate attachment holes 22, 22 are small holes extending through the thickness of the outer panel 21 and aligned with each other in a width direction of the vehicle 10 so that a license plate 24 can be attached to an exterior surface of the outer panel 21 by a pair of screws 25, 25.

The left and right lamp attachment holes 23, 23 are also small holes extending through the thickness of the outer panel 21 for attachment of left and right license lamps 26, 26 to the exterior surface of the outer panel 21. The lamp attachment holes 23, 23 are disposed above the plate attachment holes 22, 22 and they are aligned with each other in the vehicle width direction. The left and right lamp mounting holes 23, 23 are horizontally spaced from each other by a distance, which is larger than a distance between the left and right plate mounting holes 22, 22.

The license plate 24 and the license lamps 26, 26 constitute one part of exterior mounting parts or components. The license lamps 26, 26 are illuminating lamps for illuminating the license plate 24. An operating handle 27 is provided on the outer panel 21 for undertaking unlocking operation of the latch mechanism 40. The operation handle 27 is located centrally between the left and right license lamps 26, 26. The license lamps 26, 26 and the operating handle 27 are covered with a cover member 28 from a rear side thereof.

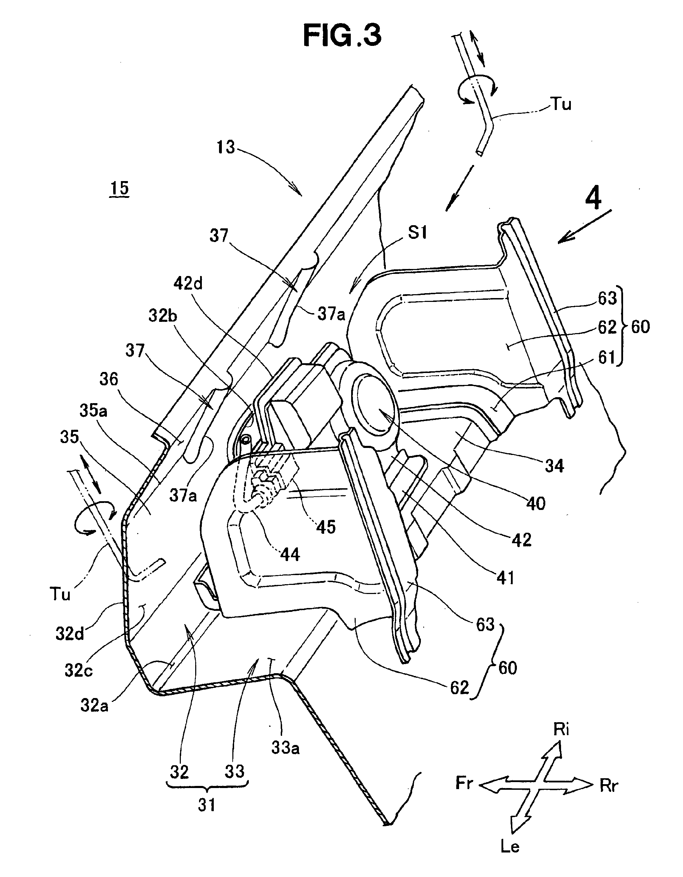

As shown in Figs. 2 and 3, the inner panel 31 includes a door facing section 32 faced with and extending along the back side (vehicle interior side) 21a of the outer panel 21, and a sidewall section 33 extending from a lower end 32a of the door facing section 32 toward the outer panel 21 and joined at a distal end thereof with a lower edge 21b of the outer panel 21. The inner panel 31 is press-formed from a sheet metal such as steel sheet.

As shown in Figs. 2 to 4, the latch mechanism 40 is disposed on a lowermost part of the back door 20 and located on the longitudinal centerline CL of the vehicle body 10. The latch mechanism 40 is disposed in the internal space Sp of the back door 20 and attached to an inside surface 33a of the sidewall section 33 of the inner panel 31. More particularly, a sheet-like latch retainer 34 is placed on and joined with the inside surface 33a of the sidewall section 33, and a bottom base 41 of the latch mechanism 41 is placed on and bolted to the latch retainer 34.

The latch mechanism 40 is configured to allow three kinds of unlocking operation and a structure of such latch mechanism 40 per se is well known. A first unlocking operation is performed when an operation switch (not shown) provided inside a passenger compartment 15 is operated to activate a built-in electric actuator (not shown) of the latch mechanism 40 for releasing the latch mechanism 40 from interlocking engagement with the striker 50. A second unlocking operation is performed when the operating handle 27 (Fig. 1) is operated to assume its unlocking position where the latch mechanism 40 is released from interlocking engagement with the striker 50.

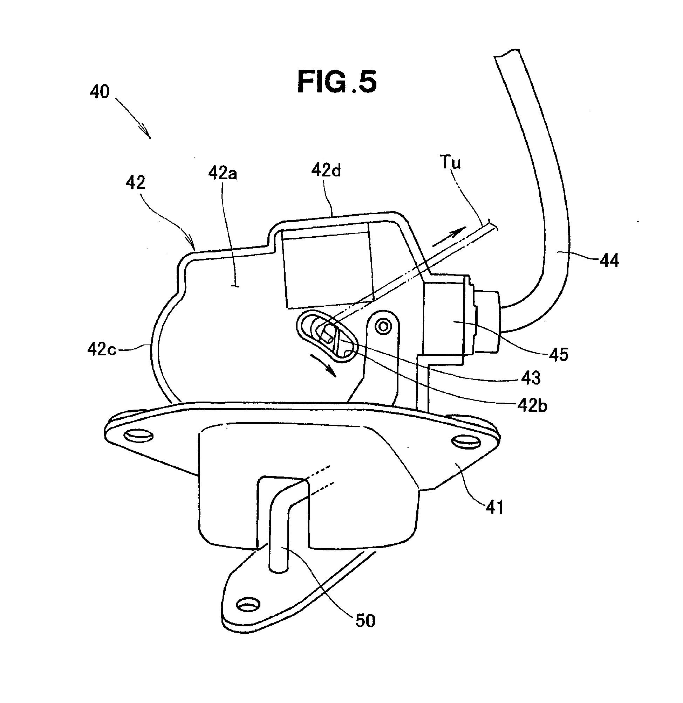

A third unlocking operation is performed in the case of emergency, which may occur when an electric system including the electric actuator is malfunctioned. As shown in Fig. 5, the latch mechanism 40 has an emergency release lever 43 disposed inside a casing 42. The emergency release lever 43 is mounted to undergo pivotal movement in the vehicle width direction. The emergency release lever 43 can be observed from the passenger compartment 15 (Fig. 2) through an oblong hole 42a formed in a front side 42a of the casing 42. The door facing section 32 of the inner panel 31 has an access hole 32b (Fig. 2) formed therein. The access hole 32b is aligned with the oblong hole 42a of the casing 42. Thus, the emergency release lever 43 can be operated by a tool, which is inserted from the passenger compartment side into the casing 42 successively through the access hole 32b of the door facing section 32 and the oblong hole 42b of the casing 42. When the emergency release lever 43 is turned in a releasing direction by the tool, the latch mechanism 40 is released from interlocking engagement with the striker 50.

As shown in Figs. 2 to 4 and 6, the back door 20 is provided with a bead 37 and a shield wall 60 that are provided on at least one lateral side (i.e., a left side or a right side) of the latch mechanism 40. The bead 37 and the shield wall 60 together form an antitheft structure 13 for preventing illicit unlocking of the latch mechanism 40, which may otherwise occur when the emergency release lever 43 (Fig. 5) is operated to turn in a releasing direction by using a piece of wire or the like illicit tool Tu. In case where an illicit access to the latch mechanism 40 using the illicit tool Tu may occur at both lateral sides (i.e., left and right sides) of the latch mechanism 40, it is preferable to provide the shield wall 60 and the bead 37 in pairs on either side in the vehicle width direction of the latch mechanism 40. In the illustrated embodiment, the antitheft structure 13 of the back door 20 has left and right beads 37, 37 and left and right shield walls 60, 60. The beads 37, 37 and the shield walls 37, 37 will be described below in greater detail.

The left and right shield walls 60, 60 are arranged to cover left and right sides of the latch mechanism 40. The left and right shield walls 60, 60 are disposed in the internal space Sp of the back door 20 and arranged symmetrically with respect to the longitudinal centerline CL of the vehicle. The shield walls 60, 60 are connected to the outer panel 21 and the inside surface 33a of the sidewall section 33 of the inner panel 31. The following description will be made only about the right shield wall 60. The left shield wall 60 is structurally the same as the right shield wall 60 and hence can be identified by the same reference characters as those used in the right shield wall 60, and a further description about the left shield wall 60 can be omitted.

The right shield wall 60 is press-formed from a steel sheet and has an L-shaped configuration as viewed in plan. The right shield wall 60 includes a substantially horizontal base portion 61 placed on and joined with the sheet-like latch retainer 34, an upright shield portion 62 extending vertically and upwardly from the base portion 61 such that the right side of the latch mechanism 40 is covered by the shield portion 62, and a vertical rear end flange portion 63 extending from a rear end of the shield portion 62 in a lateral outward direction of the latch mechanism 40.

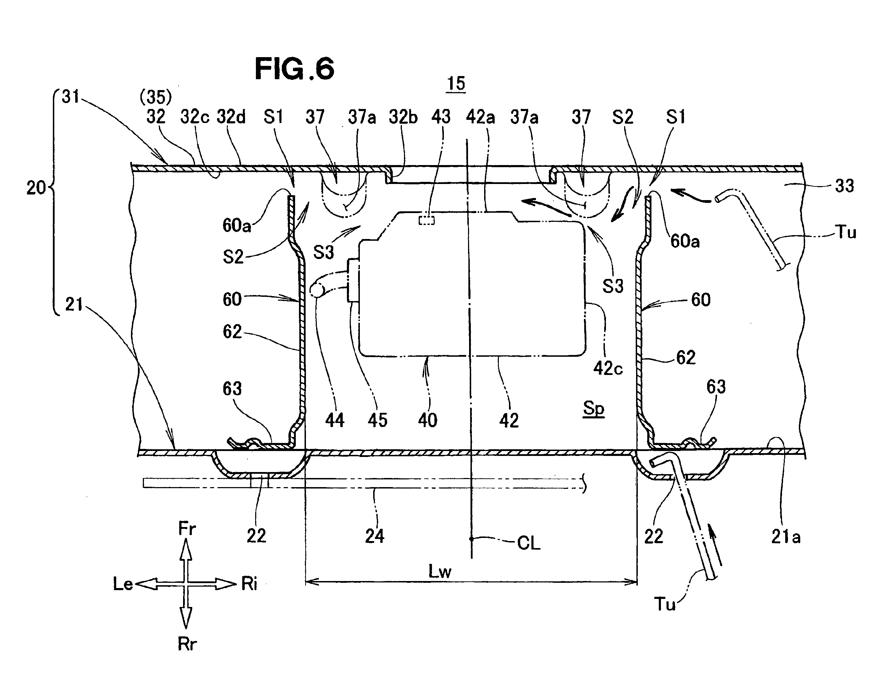

As shown in Figs. 2 and 6, the rear end flange portion 63 of the right shield wall 60 is arranged in opposed relation to the right plate attachment hole 22. The rear end flange portion 63 is placed on and joined with the back side (vehicle interior side) 21a of the outer panel 21. With this arrangement, when the back door 20 is in a closed position with the latch mechanism 40 interlocked with the striker 50, an attempt to insert an illicit tool Tu from the right plate attachment hole 22 into the internal space Sp of the back door 20 will be prohibited by the rear end flange portion 63 of the right shield wall 60. By virtue of the rear end flange 63, the antitheft structure 13 is able to perform antitheft operation with sufficient efficiencies.

As shown in Figs. 2 to 4 and 6, a front end of the upright shield portion 62 is substantially complementary in contour to the shape of an inside surface 32c of the door facing section 32 and is located adjacent to the inside surface 32c of the door facing section 32 with a first small gap S1 defined between the front end of the upright shield portion 62 and the inside surface 32c of the door facing section 32. A top end of the upright shield portion 62 lies in a level higher than an upper end of the latch mechanism 40. Because, on one hand, the upright shield portion 62 extends in the front-rear direction of the vehicle from the back side (vehicle interior side) 21a of the outer panel 21 to a position located adjacent to the inside surface 32c of the door facing section 32, and on the other hand, the upright shield portion 62 extends in a vertical upward direction beyond the upper end of the latch mechanism 40, at least a right side 42c of the latch mechanism 40 (which is a right side of the casing42c) is entirely covered by the upright shield portion 62 of the right shield wall 60.

As shown in Fig. 6, a distance Lw between the left and right shield walls 60, 60 (in the strict sense, a distance between the upright shield portions 62, 62 of the left and right shield walls 60, 60) is set to be smaller than a distance between the left and right lamp attachment holes 23, 23 shown in Fig. 1.

As shown in Figs. 2 to 4 and 6, the door facing section 32 of the inner panel 31 is formed by a front part 35 and an upper part 36. The front part 35 extends to over a front side 42a of the latch mechanism 40 (which is represented by a front side of the casing 42). The upper part 36 extends obliquely and upwardly from an upper end 35a of the front part 35 toward the outer panel 21 and covers at least part of an upper side 42d of the latch mechanism 40 (which is represented by an upper side of the casing 42). The upper end 35a of the front part 35 is located adjacent to the upper end of the latch mechanism 40, and the upper part 36 extends to overlap the upper side 42d of the latch mechanism 40 with a small space defined therebetween.

The door facing section 32 of the inner panel 31 has the left and right beads 37, 37 formed integrally therewith. Each of the beads 37, 37 is in the form of a narrow vertically elongated rib projecting convexly from the inside surface 32c of the door facing section 32 as a result of formation of a narrow vertically elongated groove produced by embossing on an outside surface 32d of the door facing section 32. The left and right beads 37, 37 extend continuously between the front part 35 and the upper part 36 of the door facing section 32 and have a semicircular shape when viewed in plan. More particularly, the beads 37, 37 are arranged to extend in a vertical downward direction from an upper end of the upper part 36 to an upper region of the front part 35 across a corner 35a formed between the upper part 36 and the front part 35. The beads 37 have a height (or an extent of projection), which is substantially uniform throughout the length of the beads 37, 37.

The left and right beads 37, 37 are located adjacent to the left and right shield walls 60, 60, respectively. In this instance, each of the beads 37, 37 can take any one of three different positions relative to a corresponding one of the shield walls 60 with or without a mutual offset created in the vehicle width direction on one side of the corresponding shield wall 6. It is preferable, however, that the left or right bead 37 be offset from a corresponding one of the left and right shield walls 60, 60 in the vehicle width direction, as shown in Figs. 3, 4 and 6. More particularly, the left bead 37 is located between the latch mechanism 40 and the left shield wall 60, and the right bead 37 is located between the latch mechanism 40 and the right shield wall 60.

The left bead 37 located between the latch mechanism 40 and the left shield wall 60 may partially overlap the latch mechanism 40 in the vehicle width direction, as shown in Figs. 4 and 6. Similarly, the right bead 37 disposed between the latch mechanism 40 and the right shield wall 60 may partially overlap the latch mechanism 40 in the vehicle width direction.

As shown in Figs. 2, 3 and 6, when the back door 20 is in a closed position, each of the left and right beads 37, 37 overlaps a corresponding one of the left and right shield walls 60, 60 in the front-rear direction of the vehicle 10 when viewed from above.

As thus far described, the left and right beads 37, 37 are offset from the left and right shield walls 60, 60 in the vehicle width direction and, at the same time, the left and right beads 37, 37 overlap the left and right shield walls 60, 60 in the front-rear direction of the vehicle 10. By thus arranging the beads 37, 37 relative to the shield walls 60, 60, there is formed within the internal space Sp of the back door 20 a labyrinth extending in the vehicle width direction.

More particularly, when the back door 20 is viewed from above as it is in the closed position, a front end 60a of each shield wall 60 and the door facing section 32 of the inner panel 31 define therebetween a first gap S1, each bead 37 and a corresponding one of the shield walls 60 overlap each other and define therebetween a second gap S2, and each bead 37 and the latch mechanism 40 define therebetween a third gap S3. The first, second and third gaps S1, S2, S3 communicate with each other and jointly form a labyrinth extending along the vehicle width direction within the internal space Sp of the back door 20.

As shown in Figs. 2 to 4 and 6, the latch mechanism 40 is provided with a connector 45 adapted to be connected with one end of a harness 44. The harness 44 is a tied bundle of electric wires or cables used for supplying electric power or signals from an external source to the built-in electric actuator (not shown) of the latch mechanism 40. In the illustrated embodiment, the connector 45 is provided on a left side of the latch mechanism 40 and oriented to face in a lateral outward direction (leftward direction) of the latch mechanism 40. The connector 45 may be provided on a right side of the latch mechanism 40 in which instance the connector 45 is oriented to face in a rightward direction of the latch mechanism 40.

As shown in Fig. 5, the connector 45 is located substantially at the same level as the emergency release lever 43. The harness 44 is arranged to extend in an upward direction from the connector 45 toward a position located directly above the latch mechanism 40.

As shown in Figs. 3, 4 and 6, the harness 44 has a longitudinal portion extending continuously from the connector 45 in a lateral outward direction of the latch mechanism 40 and laying vertically in a space defined between the latch mechanism 40 and the left shield wall 60. The longitudinal portion of the harness 44 may interfere with the labyrinth, which is formed in the internal space Sp of the back door 20 by and between the beads 37, 37, the shield walls 60, 60, the latch mechanism 40, and the door facing section 32 of the inner panel 31. Due to the interference with the longitudinal portion of the harness 44, the labyrinth is rendered complicated in configuration, which is highly effective to prevent illicit access to the latch mechanism 40 using an illicit tool Tu, which may occur when the illicit tool Tu approaches the latch mechanism 40 from a lateral outward direction of the latch mechanism 40. By thus making the labyrinth complicated in configuration, the antitheft property of the antitheft structure 13 is increased correspondingly.

The back door 20 having the antitheft structure 13 will operate as follows.

As shown in Figs. 2 to 4 and 6, the latch mechanism 40 disposed in the internal space Sp of the back door 20 is covered on its opposite lateral sides with the left and right shield walls 60, 60. With this arrangement, when the back door 20 is in a closed position with the latch mechanism 40 interlocked with the striker 50 of the vehicle body 11, an attempt may be made to unlock the latch mechanism 40 through an access from a lateral outward direction of the latch mechanism 40 by using an illicit tool Tu inserted from either one of the left and right lamp attachment holes 23 into the internal space Sp of the back door 20. In this instance, however, the attempted illicit unlocking of the latch mechanism 40 will never succeed because at least one of the shield walls 60 blocks the illicit tool Tu from approaching the latch mechanism 40 from the lateral outward direction thereof.

Furthermore, since the shield walls 60 are connected with the outer panel 21 and the inside surface 33a of the sidewall section 33 of the inner panel 31, there is no space created between the shield walls 60 and the sidewall section 33 of the inner panel 31 and between the shield walls 60 and the outer panel 21. With this arrangement, the illicit tool Tu inserted from the left or right lamp attachment hole 23 of the outer panel 21 into the internal space Sp of the back door 20 is no longer possible to approach the latch mechanism 40 via a space or gap formed either between the left or right shield wall 60 and the outer panel 21 or alternatively between the left or right shield wall 60 and the sidewall section 33 of the inner panel 31.

Additionally, partly because the beads 37 project from the door facing section 32 of the inner panel 31 into the internal space Sp of the back door 20, and partly because each of the beads 37 is located adjacent to a respective one of the shield walls 60, movement of the illicit tool Tu as approaching the latch mechanism 40 from a lateral outward direction thereof can reliably blocked by one bead 37 even when a space or gap is formed between each shield wall 60 and the door facing section 32 of the inner panel 31.

The left and right beads 37, 37 are disposed on both lateral sides (i.e., left and right sides) of the latch mechanism 40. Similarly, the left and right shield walls 60, 60 are disposed on both lateral sides of the latch mechanism 40 in the vehicle width direction. Each of the beads 37 and a corresponding one of the shield walls 60 cooperate fully to prevent the illicit tool Tu from approaching the latch mechanism 40 from a lateral outward direction of the latch mechanism 40. By thus blocking illicit access to the latch mechanism 40 by the illicit tool Tu, the antitheft property of the antitheft structure 13 increases further. The beads 37 and the shield walls 60 are simple in construction and can be readily provided with a limited increase in the weight and cost of the back door 20.

Furthermore, because the shield walls 60 are directly connected with the outer panel 21 and the sidewall section 33 of the inner panel 31, the shield walls 60 serve also as a reinforcement member associated with the outer panel 21. By thus providing the shield walls 60, the outer panel 21 is made highly rigid and resistant to deformation. Additionally, the beads 37 provided on the door facing section 32 of the inner panel 21 also increase the rigidity of the door facing section 32. The beads 37 and the shield walls 60 are able to prevent the illicit tool Tu from approaching the latch mechanism 40 from a lateral outward direction of the latch mechanism 40 and can increase the rigidity of the door facing section 32 of the inner panel 31 and the rigidity of the outer panel 21, respectively.

Each of the beads 37 is offset from a corresponding one of the shield walls 60 in the vehicle width direction. With this arrangement, the beads 37 and the shield walls 60 are allowed to have a dimension enlarged in the front-rear direction of the vehicle without taking the mutual interference into consideration. The antitheft structure 13 provided with such beads 37 and shield walls 60 in combination possesses an increased degree of design freedom, which will achieve a further improvement in the antitheft property of the antitheft structure 13.

Additional to an offset in the vehicle width direction relative to the corresponding shield wall 60, each bead 37 is arranged to overlap the corresponding shield wall 60 in the front-rear direction of the vehicle. By thus arranging the beads 37 and the shield walls 60, there is formed in the internal space Sp of the back door 20 a labyrinth extending in the vehicle width direction. As will become apparent from Figs. 3, 4 and 6, the illicit tool Tu can reach the latch mechanism 40 only when it has succeeded in completing passage in sequence through the first gap S1 between one shield wall 60 and the door facing section 60 and through the second gap S2 between the same shield wall 60 and the adjacent bead 37. Even after making complete passage through the second gap S2, the illicit tool Tu should move past the third gap S3 between the same bead 37 and the latch mechanism 40 before it reaches the emergency release lever 43. By virtue of the labyrinth formed to extend in the vehicle width direction within the internal space Sp of the back door 20, it is practically impossible to cause illicit unlocking of the latch mechanism 40 by way of an access to the latch mechanism 40 from a lateral outward direction thereof by using the illicit tool Tu. The antitheft property of the antitheft structure 13 is greatly improved.

As shown in Figs. 3, 4 and 6, the left bead 37 is located between the latch mechanism 40 and the left shield wall 60, while the right bead 37 is located between the latch mechanism 40 and the right shield wall 60. Since each of the beads 37 is located on a lateral inward side of the corresponding shield wall 60, the labyrinth formed in the internal space Sp of the back door 20 is rendered complicated in configuration as compared to a labyrinth where each bead 37 is located on a lateral outward side of the corresponding shield wall 60.

In case where the illicit tool Tu inserted from either one of the lamp attachment holes 23 (Fig. 2) of the outer panel 21 into the internal space Sp of the back door 20 has succeeded in passing through the first gap S1 between the front end of one shield wall 60 and the door facing section 32 of the inner panel 31, a further advancing movement of the illicit tool Tu is prohibited by the bead 37 located adjacent to the same shield wall 60.

Under such condition, the illicit tool Tu cannot approach the latch mechanism 40 unless it goes around a top 37a of the bead 37. By thus prohibiting the illicit tool Tu from making a direct approach to the latch mechanism 40, the antitheft structure 13 can perform antitheft operation with sufficient efficiency.

Furthermore, as shown in Figs. 2 and 3, the door facing section 32 of the inner panel 31 includes the front part 35 extending to cover the front side 42a of the letch mechanism 40 and the inclined upper part 35 extending to cover at least part of the upper side 42d of the letch mechanism 40. The beads 37 extend continuously between the upper part 36 and the front part 35 of the door facing section 32 of the inner panel 31. With this arrangement, a movement of the illicit tool Tu tending to approach the latch mechanism 40 from above is prohibited by the upper part 36 of the door facing section 32 of the inner panel 31. By thus prohibiting the illicit tool Tu from making a direct approach to the latch mechanism 40 from above, it is possible to further improve the antitheft property of the antitheft structure 13. Furthermore, because of the beads 37 provided to extend continuously between the front part 35 and the upper part 36 of the door facing section 32, the bending rigidity of the inner panel 31 is greatly increased.

Although one preferred structural embodiment of the present invention has been described in conjunction with the plate attachment holes 22 and the lamp attachment holes 23 used as attachment holes for exterior mount parts or components, the invention can be effectively embodied in conjunction with another sort of exterior-mount-component attachment holes formed in the outer panel 21 of the back door 20.

With the arrangements so far described, the present invention can be used advantageously as a vehicular back door having an antitheft structure for preventing illicit unlocking of a latch mechanism using an illicit tool inserted into an internal space of the back door through a small hole formed in an outer panel of the back door for mounting an exterior mount vehicular part or component.

## Claims

1. A vehicular back door (20) for opening and closing a door opening (12) formed in a rear side of a vehicle body (11), the back door comprising:
an outer panel (21) and an inner panel (31) provided on a vehicle interior side (21a) of the outer panel and integrally assembled with the outer panel to form the back door with an internal space (Sp) defined between the outer and inner panels, the inner panel (31) including a door facing section (32) faced with and extending along the outer panel (21) and a sidewall section (33) extending from the door facing section (31) toward the outer panel (21);
a latch mechanism (40) attached to the sidewall section (33) of the inner panel (31) for interlocking engagement with a striker (50) on the vehicle body (11) to keep the back door (20) in a closed position; and
an antitheft structure (13) for preventing illicit unlocking of the latch mechanism (40), the antitheft structure including:
a shield wall (60) disposed to cover at least one side of the latch mechanism (40) in a width direction of the vehicle, the vehicular back door (20) being **characterised in that** the shield wall (60) is connected with the outer panel (21) and the sidewall section (33) of the inner panel (31); and that
a bead (37) is formed on the door facing section (32) of the inner panel (31) and projecting into the internal space (Sp) of the back door (20) toward the outer panel (21), the bead (37) being located adjacent to the shield wall (60).

2. The vehicular back door according to claim 1, wherein the bead (37) is offset from the shield wall (60) in the vehicle width direction.

3. The vehicular back door according to claim 2, wherein the bead (37) overlaps the shield wall (60) in a front-rear direction of the vehicle.

4. The vehicular back door according to claim 2 or 3, wherein the bead (37) is located between the latch mechanism (40) and the shield wall 60).

5. The vehicular back door according to any one of claims 1 to 4, wherein the door facing section (32) of the inner panel (31) includes a front part (35) extending to cover a front side (42a) of the latch mechanism (40) and an upper part (36) extending obliquely and upwardly from an upper end (35a) of the front part (35) toward the outer panel (31) and covering at least part of an upper side (42d) of the latch mechanism (40), and the bead (37) extends continuously between the front part (35) and the upper part (36).

6. The vehicular back door according to any one of claims 1 to 5, wherein the latch mechanism (40) is provided with a connector (45) adapted to be connected with an end of a harness (44), the connector (45) being oriented to face in a lateral outward direction of the latch mechanism (40).

## Patentansprüche

1. Fahrzeughecktür (20) zum Öffnen und Schließen einer Türöffnung (12), die in einer Rückseite einer Fahrzeugkarosserie (11) gebildet ist, wobei die Hecktür aufweist:
eine äußere Platte (21) und eine innere Platte (31), die auf einer Fahrzeuginnenseite (21a) der äußeren Platte vorgesehen ist und gemeinsam mit der äußeren Platte montiert wird um die Hecktür mit einem inneren Raum (Sp) zu bilden, der zwischen der äußeren und der inneren Platte definiert ist, wobei die innere Platte (31) einen der Tür zugewandten Abschnitt (32) aufweist, die auf die äußere Platte (21) zugewandt ist und sich entlang dieser erstreckt, und einen Seitenwandabschnitt (33), der sich von dem der Tür zugewandten Abschnitt (31) in Richtung der äußeren Platte (21) erstreckt;
einen Verschlussmechanismus (40), der an dem Seitenwandabschnitt (33) der inneren Platte (31) angebracht ist für einen verschließenden Eingriff mit einer Gegenplatte (50) an der Fahrzeugkarosserie (11), um die Hecktür (20) in einer geschlossenen Position zu halten;
eine Antidiebstahlkonstruktion (13), zum Verhindern eines unerlaubten Aufschließens des Verschlussmechanismus (40), wobei die Antidiebstahlkonstruktion enthält;
eine Schutzwand (60), die angeordnet ist, um wenigstens eine Seite des Verschlussmechanismus (40) in einer Breitenrichtung des Fahrzeugs abzudecken, wobei die Fahrzeughecktür (20),
**dadurch gekennzeichnet ist,**
**dass** die Schutzwand (60) mit der äußeren Platte (21) und dem Seitenwandabschnitt (33) der inneren Platte (31) verbunden ist; und dass
eine Sicke (37) an dem der Tür zugewandten Abschnitt (32) der inneren Platte (31) ausgebildet ist und die in einen inneren Raum (Sp) der Hecktür (20) auf die äußere Platte (21) zu vorsteht, wobei die Sicke (37) benachbart zu der Schutzwand (60) angeordnet ist.

2. Fahrzeughecktür gemäß Anspruch 1, wobei die Sicke (37) versetzt von der Schutzwand (60) in der Fahrzeugbreitenrichtung ist.

3. Fahrzeughecktür gemäß Anspruch 2, wobei die Sicke (37) die Schutzwand (60) in einer Vorwärts- Rückwärtsrichtung des Fahrzeugs überlappt.

4. Fahrzeughecktür gemäß Anspruch 2 oder 3, wobei die Sicke (37) zwischen dem Verschlussmechanismus (40) und der Schutzwand (60) angeordnet ist.

5. Fahrzeughecktür gemäß einem der Ansprüche 1 bis 4, wobei der der Tür zugewandte Abschnitt (32) der inneren Platte (31) einen vorderen Teil (35) enthält, der sich erstreckt, um eine Vorderseite (42a) des Verschlussmechanismus (40) abzudecken, und einen oberen Teil (36), der sich schräg und aufwärts von dem oberen Ende (35a) des vorderen Teils (35) auf die hintere Platte (31) zu erstreckt und der wenigstens einen Teil einer oberen Seite (42d) des Verschlussmechanismus (40) abdeckt, und die Sicke (37) sich kontinuierlich zwischen dem vorderen Teil (35) und dem oberen Teil (36) erstreckt.

6. Fahrzeughecktür gemäß einem der Ansprüche 1 bis 5, wobei der Verschlussmechanismus (40) mit einem Verbinder (45) versehen ist, der angepasst ist, um mit einem Ende eines Kabelstrangs (44) verbunden zu werden, wobei der Verbinder (45) so orientiert ist, dass er in einer seitlichen Auswärtsrichtung des Verschlussmechanismus (40) orientiert ist.

## Revendications

1. Portière arrière (20) de véhicule pour ouvrir et fermer une ouverture de portière (12) formée dans un côté arrière d'une carrosserie de véhicule (11), la portière arrière comprenant :
un panneau externe (21) et un panneau interne (31) prévu sur un côté intérieur (21a) de véhicule du panneau externe et assemblé de manière solidaire avec le panneau externe afin de former la portière arrière avec un espace interne (Sp) défini entre les panneaux externe et interne, le panneau interne (31) comprenant une section de portière faisant face (32) en vis-à-vis avec et s'étendant le long du panneau externe (21) et une section de paroi latérale (33) s'étendant à partir de la section de portière faisant face (31) vers le panneau externe (21) ;
un mécanisme de verrouillage (40) fixé à la section de paroi latérale (33) du panneau interne (31) pour la mise en prise par verrouillage avec une gâche (50) sur la carrosserie de véhicule (11) pour maintenir la portière arrière (20) dans une position fermée ; et
une structure antivol (13) pour empêcher le déverrouillage illicite du mécanisme de verrouillage (40), la structure antivol comprenant :
une paroi de protection (60) disposée pour recouvrir au moins un côté du mécanisme de verrouillage (40) dans le sens de la largeur du véhicule, la portière arrière (20) de véhicule étant **caractérisée en ce que** la paroi de protection (60) est raccordée avec le panneau externe (21) et la section de paroi latérale (33) du panneau interne (31) ;
et **en ce que** :
un cran (37) est formé sur la section de portière faisant face (32) du panneau interne (31) et faisant saillie dans l'espace interne (Sp) de la portière arrière (20) vers le panneau externe (21), le cran (37) étant positionné de manière adjacente à la paroi de protection (60).

2. Portière arrière de véhicule selon la revendication 1, dans laquelle le cran (37) est décalé de portière de la paroi de protection (60) dans le sens de la largeur du véhicule.

3. Portière arrière de véhicule selon la revendication 2, dans laquelle le cran (37) recouvre la paroi de protection (60) dans une direction avant - arrière du véhicule.

4. Portière arrière de véhicule selon la revendication 2 ou 3, dans laquelle le bourrelet (37) est positionné entre le mécanisme de verrouillage (40) et la paroi de protection (60).

5. Portière arrière de véhicule selon l'une quelconque des revendications 1 à 4, dans laquelle la section de portière faisant face (32) du panneau interne (31) comprend une partie avant (35) s'étendant pour recouvrir un côté avant (42a) du mécanisme de verrouillage (40) et une partie supérieure (36) s'étendant de manière oblique et vers le haut à partir d'une extrémité supérieure (35a) de la partie avant (35) vers le panneau externe (31) et recouvrant au moins une partie d'un côté supérieur (42d) du mécanisme de verrouillage (40), et le cran (37) s'étend de manière continue entre la partie avant (35) et la partie supérieure (36).

6. Portière arrière de véhicule selon l'une quelconque des revendications 1 à 5, dans laquelle le mécanisme de verrouillage (40) est prévu avec un connecteur (45) adapté pour être raccordé avec une extrémité d'un faisceau (44), le connecteur (45) étant orienté pour faire face à une direction latérale vers l'extérieur du mécanisme de verrouillage (40).
